# EUROPÄISCHE PATENTSCHRIFT

(11) **EP 1 415 308 B1**
(45) Veröffentlichungstag und Bekanntmachung des Hinweises auf die Patenterteilung: **21.02.2007**
(21) Anmeldenummer: 01986795.1
(22) Anmeldetag: 12.10.2001
(51) Int. Cl.: H01B 1/00

(54) **HERSTELLUNG VON VERBUNDISOLATOREN DURCH ANSPRITZEN VON EINZELSCHIRMEN AN EINEN STRUNK**
PRODUCTION OF COMPOSITE INSULATORS BY INJECTING DIFFERENT SCREENS ONTO AN INSULATOR SHANK
PRODUCTION D'ISOLATEURS COMPOSITES PAR MOULAGE PAR INJECTION DE DIFFERENTS ECRANS SUR UN FUT

(30) Priorität: 13.10.2000 DE 10050879; 16.12.2000 DE 10062870
(43) Veröffentlichungstag der Anmeldung: 06.05.2004
(73) Patentinhaber: Lapp Insulator GmbH, 95632 Wunsiedel (DE)
(72) Erfinder: MAINARDIS, Rene, 95100 Selb (DE); BRAUNE, Michael, 95632 Wunsiedel (DE)
(74) Vertreter: Uppena, Franz
(86) Internationale Anmeldenummer: PCT/EP2001/011810
(87) Internationale Veröffentlichungsnummer: WO 2002/031838

(56) Entgegenhaltungen:
- DE-A- 19 858 215
- DE-C- 19 944 513

## Beschreibung

Die Erfindung betrifft ein Verfahren zur Herstellung von Verbundisolatoren entsprechend dem Oberbegriff des ersten Anspruchs sowie eine Vorrichtung zur Herstellung von Verbundisolatoren entsprechend dem Oberbegriff des siebzehnten Anspruchs.

Gegenüber den herkömmlichen, homogen aus dem Werkstoff Keramik oder Glas gefertigten Isolatoren bestehen Verbundisolatoren aus zwei Komponenten unterschiedlicher Werkstoffe. Der Strunk der Verbundisolatoren besteht aus Stäben oder Rohren, in der Regel aus mit Glasfasern verstärktem Epoxidharz. Der Strunk kann vollständig mit einem Mantel überzogen sein, auf dem eine Anzahl voneinander beabstandeter, tellerförmiger Schirme aufgeschoben ist. Statt tellerförmiger Schirme können auch ein oder mehrere spiralförmige Schirme den Strunk umgeben. Der Mantel und die Schirme bestehen aus einem Werkstoff mit hohen Isolationseigenschaften. Werkstoffe mit diesen Eigenschaften sind elastomere Werkstoffe, beispielsweise polymere Kunststoffe, zu denen auch HTV-Silikone gehören (HTV: Hoch-Temperatur-Vernetzend).

Verbundisolatoren werden in der Regel dergestalt hergestellt, dass die Schirme einzeln angefertigt und dann auf einen mit Extrudat überzogenen Strunk in der erforderlichen Anzahl aufgeschoben und mit dem Überzug vulkanisiert werden, wie es aus der DE 3507509 A1 bekannt ist, oder dass in einer zweiteiligen Form mit einer vorgegebenen Anzahl von Schirmen ein Stab mittig eingelegt wird und die Schirme alle auf einmal angespritzt werden. Das letztgenannte Verfahren, das aus der DE 4202653 A1 bekannt ist, hat den Nachteil, dass mit einer solchen Form nur ein Isolator mit einer festen Anzahl von Schirmen in einer festgelegten Gestalt und mit festgelegtem Abstand gefertigt werden kann. Aus der DE 19858215 A1 sind ein Verfahren und eine Vorrichtung bekannt, mit denen es möglich ist, einen Kern, den Strunk, mit Mantel und Schirmhülle in einem Arbeitsgang zu umgeben.

Aufgabe der vorliegenden Erfindung ist es, eine Herstellung von Verbundisolatoren zu ermöglichen, wobei die Anzahl, der Abstand sowie Form und Größe der Schirme von Isolator zu Isolator oder an einem Isolator selbst veränderbar sind.

Die Aufgabe wird erfindungsgemäß dadurch gelöst, dass auf einem Strunk eines Verbundisolators in Form eines Stabes oder eines Rohres ein Mantel aufgetragen wird und dass danach jeweils zum Anspritzen eines Schirmes eine Spritzgussform, die Schirmform, zugestellt wird. Nach Anspritzen eines Schirmes an den Strunk wird nach dem Aushärten des Werkstoffs zum Ausformen des Schirmes die Schirmform geöffnet und vom Strunk wieder wegbewegt. Zum Anspritzen eines nachfolgenden Schirmes wird der Strunk mit dem bereits angespritzten Schirm so weit vorgeschoben, bis dass dem Strunk die Schirmform in der Position zugestellt werden kann, wo der nachfolgende Schirm auf ihm angespritzt werden soll. Alternativ kann auch die Schirmform in Achsrichtung des Strunks so weit verschoben werden, bis dass die Position erreicht ist, in der der nachfolgende Schirm auf dem Strunk angespritzt werden soll.

Bei der Herstellung von Verbundisolatoren, die eine größere Anzahl von Schirmen aufweisen, können auch mehrere Schirmformen hintereinander angeordnet sein. Die Schirmformen können dem Strunk zum Anspritzen aller Schirme gleichzeitig zugeführt werden. Es ist aber auch möglich, die Schirmformen zum Anspritzen der Schirme nacheinander oder beliebig zeitversetzt dem Strunk zuzuführen.

In der anderen Ausgestaltung der Erfindung sind mehrere Schirmformen hintereinander in einem Abstand voneinander angeordnet, der etwa der Länge eines herzustellenden Verbundisolators entspricht. Diese Schirmformen sind dem Strunk ebenfalls gleichzeitig zustellbar. Dabei werden bei einem Anspritztakt mehrere Isolatoren gleichzeitig hergestellt, wobei jeweils ein Schirm für jeden Isolator an den Strunk angespritzt wird. Bei diesen Isolatoren sind die Abstände der gleichzeitig angespritzten Schirme zu den ihnen nächstliegenden, vorhergehenden Schirmen gleich.

Bei einer weiteren Ausgestaltung des letzten Verfahrensvariante können statt jeweils nur einer Schirmform zur Herstellung jeweils nur eines Verbundisolators auch mehrere, hintereinander angeordnete Schirmformen vorgesehen sein, mittels derer bei jedem Anspritztakt mehrere Schirme der jeweiligen Isolatoren gleichzeitig angespritzt werden.

Bei den beiden beschriebenen Verfahren erfolgt eine wesentlich rationellere und schnellere Herstellung von Verbundisolatoren als bei den bekannten Verfahren. Die Anzahl der Schirmformen liegt, je nach Einsatzzweck, bevorzugt zwischen zwei und zehn. Je nach Größe und Anzahl sind die Schirmformen entweder jede für sich an einer Spritzgussmaschine angeordnet oder es sind mehrere Schirmformen an einer Maschine gleichzeitig angeschlossen.

Die Erfindung ermöglicht es auf einfache Weise nacheinander völlig unterschiedliche Verbundisolatoren herzustellen. Soll der Abstand der Schirme geändert werden, kann bei einer einzelnen Schirmform durch Verändern des Vorschubs des Strunks der Abstand der Schirme auf den Isolatoren verändert werden. Sind mehrere Schirmformen zum gleichzeitigen Anspritzen von Schirmen vorgesehen, kann der Abstand der Schirmformen untereinander geändert werden. Da eine solche Änderung sogar nach jedem Anspritztakt möglich ist, kann sogar auf einem einzelnen Isolator der Abstand der Schirme völlig unterschiedlich eingestellt werden.

Die Möglichkeit der Änderung der Anzahl der Schirmformen nach jedem Anspritztakt ist dann von Vorteil, wenn mehrere Schirme eines Isolators mit mehreren hintereinander angeordneten Schirmformen gleichzeitig angespritzt werden, aber die Anzahl der insgesamt anzuspritzenden Schirme es erfordert, dass der Isolator in der Endsumme ein oder einige Schirme weniger tragen soll, als mit dem vorgesehenen Vielfachen von Anspritztakten erzeugt würden. Dann kann vor dem letzten Anspritztakt die Anzahl der Schirmformen auf die Ergänzung zur Gesamtzahl der Schirme abgestimmt werden.

Die Erfindung ermöglicht es weiterhin, Verbundisolatoren mit Schirmen unterschiedlicher Gestalt herzustellen, beispielsweise mit glatten Schirmunterseiten oder mit Rillen zur Kriechwegverlängerung auf der Unterseite. Die Zusammenstellung von Schirmformen für Schirme mit unterschiedlicher Gestalt ist nicht nur für die Herstellung nachfolgender Isolatoren möglich, sondern bereits nach jedem Anspritztakt. Dadurch können selbst an einzelnen Isolatoren Schirme mit unterschiedlicher Gestalt angespritzt werden.

Ebenso kann durch Austausch der Schirmformen der Durchmesser der Schirme verändert werden. Dieser Austausch ist ebenfalls nach jedem Anspritztakt möglich, so dass selbst ein Isolator unterschiedlich große Schirme aufweisen kann. Für bestimmte Anwendungsfälle, beispielsweise zum Schutz vor Vereisung, ist es vorteilhaft, wenn ein Schirm mit größerem Durchmesser über Schirmen mit geringerem Durchmesser an ein und demselben Isolator angeordnet ist.

Die Erfindung ermöglicht es weiterhin, durch Austausch von Schirmformen gegen Schirmformen sowohl mit einem anderen Schirmdurchmesser als auch mit einer anderen Schirmgestalt die Zusammenstellung der Schirme zu ändern. Diese Änderungen können sowohl bei aufeinanderfolgenden Isolatoren als auch bei der Zusammenstellung der Schirme eines einzelnen Isolators durchgeführt werden. Letzteres führt ebenfalls zu einer Folge unterschiedlicher Schirme an ein und demselben Isolator.

Zum Ausformen der Schirme müssen die Schirmformen geöffnet werden. Insbesondere bei Schirmen mit kleinen Durchmessern und glatten Schirmoberflächen genügt es, wenn die Schirmformen in einer Ebene durch die Strunkachse geteilt sind. Bei Schirmen mit größerem Durchmesser und damit größerem Volumen und insbesondere mit Strukturen zur Verlängerung des Kriechwegs auf den Oberflächen ist die Ausformbarkeit der Schirme nur möglich, wenn die Schirmformen sowohl in der Schirmebene als auch in einer Ebene durch die Strunkachse teilbar sind. Durch die Teilung in der Schirmebene entstehen zwei Schirmformhälften, eine für die Schirmoberseite und eine für die Schirmunterseite, die durch die Ebene durch die Strunkachse nochmals in zwei Teile geteilt werden. Die in der Ebene durch die Strunkachse geteilten Formhälften sind rechts und links neben dem Strunk angeordnet und werden zum Aufspritzen der Schirme auf den Strunk aufgesetzt und umschließen ihn. Dann wird der Schirmwerkstoff eingespritzt. Nach dessen Aushärten werden erst die Schirmhälften in der Schirmebene selbst in entgegengesetzte Richtungen entlang der Strunkachse zum Freigeben des Schirms auseinandergefahren und dann senkrecht zur Strunkachse von dem Strunk wieder wegbewegt.

Der Strunk wird vor dem Aufspritzen der Schirme mit einem Überzug, einem Mantel, aus demselben oder einem vergleichbaren Werkstoff versehen, aus dem die Schirme geformt werden, vorzugsweise HTV-Silikone. Mantel und Schirme bilden dadurch auf dem Strunk einen homogenen Überzug, der vorteilhaft nur aus einem Werkstoff besteht.

Zur Verbesserung der Haftfähigkeit der Schirme auf dem Strunk kann der Überzug auf dem Strunk mechanisch vorbehandelt, beispielsweise durch Bürsten aufgerauht werden. Zusätzlich zur mechanischen Vorbehandlung oder anstatt dieser kann ein Haftvermittler aufgebracht werden, vorzugsweise ein Silan.

Die Schirmformen können in einer anderen erfindungsgemäßen Vorrichtung während des Vorschubs des Strunks mit ihm mitwandern. Der Strunk kann taktweise oder kontinuierlich vorgeschoben werden. Dazu werden die Stäbe oder Rohre zu einem endlosen Strunk zusammengeklebt. Dieser wird dann durch einen Extruder geschoben, wo ein Mantel, ein Überzug, aus dem Schirmwerkstoff auf ihn aufgetragen wird. Hinter dem Extruder werden dem Strunk die Schirmformen für die Schirme zugestellt. Die Hälften der Schirmformen können beispielsweise jeweils auf einer endlosen, umlaufenden Kette angeordnet sein, wobei die Ketten parallel rechts und links vom Strunk angeordnet sind und mit ihm in gleicher Geschwindigkeit mitwandern. Auf der dem Strunk zugewandten Seite bilden die Ketten mit den geschlossenen Schirmformen die sogenannte Formstrecke. Wenn die durch die Ketten zusammengeführten Schirmform-Hälften geschlossen sind, werden, je nach Schirmformgröße und Anzahl der Schirmformen, eine oder mehrere Spritzgußmaschinen zugestellt und die Schirmformen gefüllt. Dann wandern die Schirmformen zum Auskühlen der Schirme durch die Formstrecke. Zum Ausformen der Schirme genügt es, wenn bei kleinen Schirmen mit geringem Durchmesser und ohne Konturen zur Kriechwegverlängerung die Trennebene in einer Ebene durch die Mittellinie des Strunks liegt. Insbesondere bei Schirmen mit Konturen zur Kriechwegverlängerung auf ihrer Oberfläche ist es aber von Vorteil, wenn die Schirmformen nicht nur in der Ebene durch die Strunkachse, sondern auch in der Schirmebene nochmals geteilt sind. Dadurch wird ein Ausformen von Schirmen mit dieser Gestalt erst möglich. Die Hälften der Schirmform für die Oberseite und für die Unterseite der Schirme werden durch die Ebene durch die Mittellinie des Strunks nochmals geteilt. Diese Teile sind jeweils auf den rechts und links parallel zum Strunk angeordneten Ketten angeordnet, die sich ebenfalls parallel gegenüberliegen. Das Ausformen der Schirme bei dieser Ausführung erfolgt vergleichbar mit dem Ausformen der Schirme bei den ortsfest angeordneten Schirmformen. Allerdings kann es in Abhängigkeit von Schirmgröße und Schirmabstand erforderlich sein, die Teile der Schirmformhälften an den Ketten nach dem Ausformen seitwärts aus der Transportrichtung des entstehenden Isolators herausgeschwenkt werden, damit sie nicht in die Schirme schlagen, wenn sie aufgrund der Umlenkung der Ketten eine Schwenkbewegung nach vorne machen.

Nach jedem Öffnen einer Schirmform am Ende der Formstrecke zum Anspritzen der Schirme kann an deren Anfang eine neue Schirmform dem Strunk des Isolators zugestellt werden. Auf der dem Strunk abgewandten Seite der Kette können können dann die Schirmformen gegen Schirmformen mit einem anderen Schirmdurchmesser oder einer anderen Gestalt ausgetauscht werden. Weiterhin kann die Anzahl der Schirmformen und/oder ihr Abstand voneinander verändert werden.

Die Erfindung ermöglicht es, Isolatoren mit Schirmen unterschiedlicher Größe in unterschiedlichen Gestalten mit unterschiedlichen Abständen zueinander herzustellen, ohne dass ein aufwendiges Lager von Schirmformen erforderlich ist. Diese Verschiedenheit der Schirme ist selbst bei einem einzelnen Isolator möglich. Denkbar ist weiterhin, dass der Werkstoff der Schirme durch einen Wechsel der Spritzgußmaschine gewechselt wird, um den Werkstoff optimal auf die an die Schirme gestellten Anforderungen abzustellen. Sind mehrere Spritzgußmaschinen vorgesehen, können diese unterschiedlichen Werkstoff enthalten, so dass im Wechsel Schirme aus verschiedenen Werkstoffen an ein und demselben Strunk angespritzt werden können.

Für ein Ausführungsbeispiel nach dem erfindungsgemäßen Verfahren wurden folgende Parameter eingesetzt: Auf einem stabförmigen Strunk aus GFK (Glasfaser verstärkter Kunststoff) von 16 mm mit einem Mantel von 3 mm Extrudat aus einem dem Schirmwerkstoff vergleichbaren HTV-Silikon wird bei einer Formtemperatur von 180°C ein Schirm von 152 mm Durchmesser aufgespritzt. Bei einer Werkstofftemperatur von 80°C beträgt die Einspritzdauer, je nach Werkstoff, bis zu 20 Sekunden. Die Vernetzungszeit variiert, ebenfalls in Abhängigkeit des Werkstoffs, zwischen 30 und 270 Sekunden.

Anhand von Ausführungsbeispielen wird die Erfindung näher erläutert.

Es zeigen:
- Figuren 1 a bis 1 d:: die Herstellung von Verbundisolatoren mit vier stationären Schirmformen und
- Figur 2:: die Herstellung von Verbundisolatoren mit Schirmformen, die im Vorschub-Takt mit dem Strunk mitwandern.

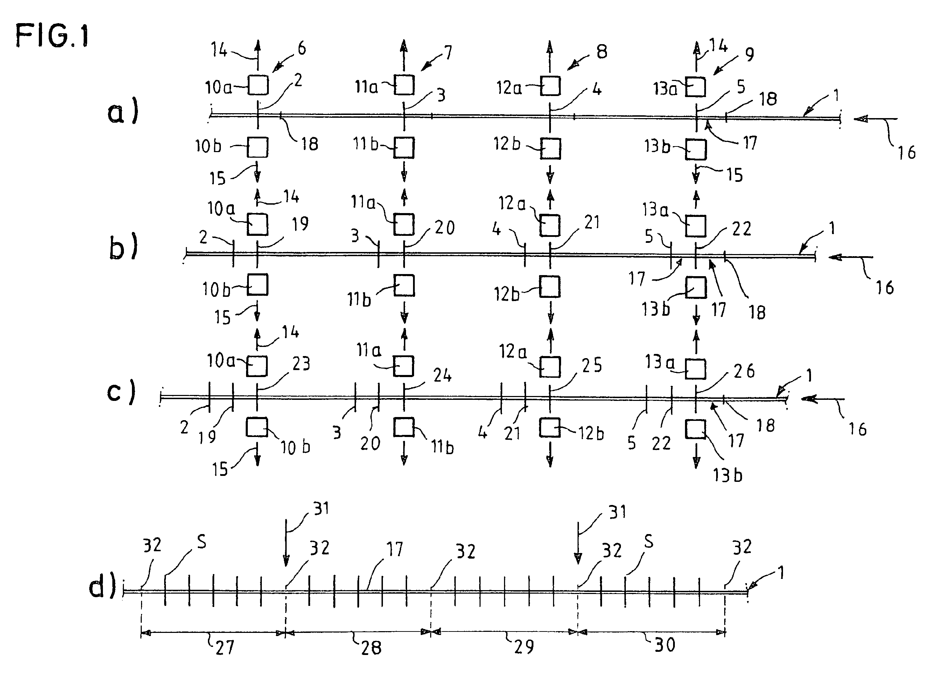

In der Figur 1 wird in vier Herstellungsschritten schematisch die Herstellung von Verbundisolatoren nach einem Ausführungsbeispiel des erfindungsgemäßen Verfahrens erläutert.

Ein Strunk 1, auch Seele oder Kern des lsolators genannt, trägt in der Figur 1a bereits vier Schirme 2, 3, 4 und 5, die in vier voneinander beabstandeten Schirmformen 6 bis 9 geformt worden sind. Im vorliegenden Ausführungsbeispiel werden vier Verbundisolatoren gleichzeitig hergestellt. Jede der vier Schirmformen 6 bis 9 übernimmt dabei die Herstellung eines Verbundisolators. Seine Länge ist durch die Abstände der Schirmformen voneinander begrenzt. Die Schirme 2, 3, 4 und 5 wurden an den Strunk 1 angespritzt, der zuvor in einer hier nicht dargestellten Einrichtung mit einem Mantel aus einem HTV-Silikon überzogen wurde. Die jeweiligen Formhälften 10a und 10b der Schirmform 6, 11 a und 11 b der Schirmform 7, 12a und 12b der Schirmform 8 und 13a und 13b der Schirmform 9 sind jeweils in Richtung der Pfeile 14 bzw. 15 in der jeweiligen Schirmebene von dem Strunk 1 wegbewegt worden, um die Schirme auszuformen und freizugeben. Die vier Schirmformen 6 bis 9 können, je nach Größe und Abstand der zu formenden Schirme, an ein und derselben Spritzgussmaschine oder aber jeweils an einer eigenen Spritzgussmaschine angeordnet sein.

Nach dem Ausformen der Schirme wird der Strunk 1 in Pfeilrichtung 16 um eine Strecke 17, dem Abstand der Schirme voneinander, so weit vorgeschoben, dass jeweils die Position 18, an der der nachfolgende Schirm angespritzt werden soll, den Schirmformen 6, 7, 8 und 9 gegenüberliegt. Die Figur 1b zeigt den Strunk 1 nach dem Anspritzen des jeweils zweiten, nachfolgenden Schirms, 19, 20, 21 bzw. 22. Auch hier ist die Situation nach dem Ausformen der Schirme dargestellt.

Für das Anspritzen des nachfolgenden dritten Schirms wird der Strunk um den im vorliegenden Ausführungsbeispiel festliegenden Abstand 17 zwischen zwei Schirmen in Pfeilrichtung 16 so weit vorgeschoben, bis auch in diesem Fall die Anspritzpunkte 18 jeweils den Schirmformen gegenüberliegen. Die Figur 1 c zeigt den Zustand nach dem Anspritzen des jeweils dritten Schirms 23, 24, 25 bzw. 26.

Nach dem Anspritzen des jeweils vierten Schirms wird der Strunk nochmals in Pfeilrichtung 16 um den Abstand 17 zwischen zwei Schirmen für das Anspritzen des jeweils nachfolgenden fünften Schirms vorgeschoben.

Die Figur 1d zeigt die fertig hergestellten, vier durch den Strunk 1 aneinander hängenden Verbundisolatoren 27, 28, 29 und 30. Jeder der vier Verbundisolatoren weist jeweils fünf Schirme S auf, die untereinander alle denselben Abstand 17 aufweisen. Die Pfeile 31 sollen andeuten, dass die bereits fertigen, aber noch aneinander hängenden Verbundisolatoren 27 bis 30 aus dem Bereich der Schirmformen heraustransportiert worden sind. Durch hier nicht dargestellte Trennwerkzeuge wird der Strunk 1 an den Trennstellen 32 durchgetrennt, so dass vier Verbundisolatoren 27, 28, 29 und 30 mit derselben Länge und derselben Anzahl von Schirmen S entstehen, wobei die Schirme S jeweils denselben Abstand 17 aufweisen.

Durch Einschieben eines neuen Strunks in die vier Schirmformen können die nächsten vier Verbundisolatoren gleichzeitig hergestellt werden. Die erfindungsgemäße Anordnung der Schirmformen bietet die Möglichkeit, die Schirmformen auszutauschen, so dass beispielsweise Schirme mit größeren oder kleineren Schirmdurchmessern oder einer anderen Gestalt angespritzt werden können.

Es können aber auch vier Spritzgussformen für Schirme eingesetzt werden, die sowohl unterschiedliche Dimensionenen als auch eine unterschiedliche Gestaltung, beispielsweise Konturen auf der Unterseite, aufweisen. Außerdem ist es möglich, die Abstände der Schirme zu variieren, in dem der Vorschub 16 geändert wird.

Wie hiermit ersichtlich ist, können durch die Anordnung von mehreren Spritzgussformen für Schirme hintereinander Verbundisolatoren mit einer individuellen Anzahl von Schirmen mit unterschiedlichem Durchmesser und unterschiedlicher Gestalt in unterschiedlichem Abstand zueinander, sogar in nacheinander folgenden Anspritztakten, gleichzeitig hergestellt werden.

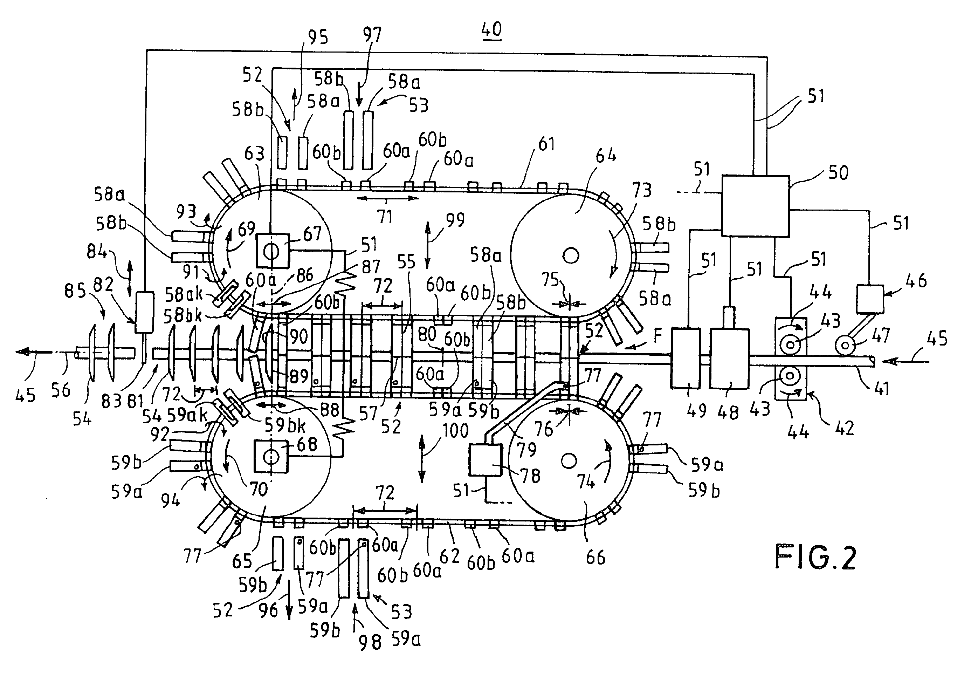

Die Figur 2 zeigt, ebenfalls in einer schematischen Darstellung, ein weiteres Ausführungsbeispiel für eine Vorrichtung 40 zu Herstellung von Verbundisolatoren. Bei dieser Vorrichtung sind die Schirmformen nicht ortsfest, sondern werden dem Strunk zum Anspritzen der Schirme nacheinander zugestellt und wandern bei jedem Vorschub des Strunks während des Aushärtens der Schirme bis zu deren Ausformung mit.

Der Strunk 41 wird durch eine Vorschubeinrichtung 42 mittels der beiden an ihm anliegenden Antriebsrollen 43 in die Vorrichtung 40 eingeschoben, wie das durch die Pfeile 44 angedeutet wird. Zur Steuerung des Vorschubs 45 des Strunks 41 ist ein Längenmessgerät 46 vorgesehen, das mit einem Tastrad 47 auf der Oberfläche des Strunks 41 aufliegt. Vor dem Aufspritzen der Schirme wird der Strunk 41 in einer Einrichtung 48 mit einem vulkanisierten Überzug, einem Mantel versehen, der aus demselben oder einem vergleichbaren Werkstoff besteht, aus dem die Schirme geformt werden.

Zur Verbesserung der Haftfähigkeit der Schirme auf dem Strunk 41 kann der in der Einrichtung 48 aufgetragene Überzug auf dem Strunk mechanisch vorbehandelt, beispielsweise durch Bürsten aufgerauht werden. Zusätzlich zur mechanischen Vorbehandlung oder anstatt dieser kann ein Haftmittel aufgebracht werden. Die Vorbehandlung erfolgt in der Einrichtung 49.

Die Herstellung der Verbundisolatoren kann vollautomatisch erfolgen, wobei die Verfahrensabläufe in den einzelnen Einrichtungen mittels einer Steuereinrichtung 50 aufeinander abgestimmt werden. Die einzelnen Einrichtungen, die der Vorrichtung 40 zur Herstellung der Verbundisolatoren zugeordnet sind, sind über Signal- und Steuerleitungen 51 mit der Steuereinrichtung 50 verbunden. Diese steuert über die Vorschubeinrichtung 42 die Durchlaufgeschwindigkeit durch die Vorrichtung 40, die auf das Anspritzen der Schirme abgestimmt wird. Weiterhin wird der Auftrag des Mantels und seine Vulkanisierung in der Einrichtung 48 und die Vorbehandlung, das Auftragen des Haftmittels, in der Einrichtung 49 in Abhängigkeit von der Durchlaufgeschwindigkeit des Strunks 41 gesteuert. Mit Hilfe der Informationen des Längenmessgeräts 46 wird der Abstand zwischen den Schirmen und die Länge der jeweiligen Isolatoren festgelegt.

Die Vorrichtung 40 umfasst eine größere Anzahl von Schirmformen 52, 53 zum Anspritzen der Schirme 54. Wie hier mit den Schirmformen 52 und 53 angedeutet, können zur Formgebung von Schirmen unterschiedlicher Größe entsprechende Formen vorgesehen sein. Zur besseren Ausformung der Schirme 54 sind die Schirmformen 52 und 53 geteilt in einer Ebene 55 senkrecht zur Mittellinie 56 des Strunks 41 und in einer dazu senkrecht stehenden Ebene 57, die durch die Mittellinie 56 geht. Die Ebene 57 teilt dadurch die Schirmformen 52, 53 in zwei Hälften mit den Teilen 58a und 58b sowie mit den Teilen 59a und 59b. Die Ebene 55 wiederum teilt diese beiden Schirmform-Hälften in jeweils einen Teil 58a bzw. 59a, die zusammen die Oberseite des Schirms 54 formen, sowie jeweils einen Teil 58b bzw. 59b, die zusammen die Unterseite des Schirms 54 formen. Jedes dieser Teile 58a und 58b sowie 59a und 59b ist in einer der Haltevorrichtungen 60a bzw. 60b installiert, die auf einer endlosen Kette 61 bzw. 62 angeordnet sind. Die beiden Ketten 61 und 62 liegen rechts und links parallel zum Strunk 41. Auf der dem Strunk 41 zugewandten Seite bilden sie zusammen mit den Schirmformen die Formstrecke F. Die Kette 61 wird über das Antriebsrad 63 und das Umlenkrad 64 geführt. Die Kette 62 wird um das Antriebsrad 65 und das Umlenkrad 66 geführt. Der Antrieb 67 des Antriebrads 63 sowie der Antrieb 68 des Antriebrads 65 laufen synchron mit der gleichen Umdrehungsgeschwindigkeit. Die beiden Ketten 61 und 62 bewegen sich dadurch in gleicher Geschwindigkeit, die auf den Vorschub des Strunks 41 abgestimmt ist. Das Antriebsrad 63 dreht sich im Uhrzeigersinn, wie durch den Pfeil 69 angedeutet wird, während sich das Antriebsrad 65 entgegen dem Uhrzeigersinn dreht, wie durch den Pfeil 70 angedeutet wird.

Auf den der Formstrecke F abgewandten Seiten der Ketten 61 und 62 können die frei zugänglichen Teile 58a und 58b bzw. 59a und 59b der Hälften der Schirmformen ausgewechselt werden. Die Schirmformen sind hier nach dem Ausformen der Schirme in geöffneter Stellung gezeigt. Der Abstand der Haltevorrichtungen 60a und 60b voneinander kann so eingestellt werden, dass das Ausformen der Schirme unabhängig von deren Dicke und Gestalt möglich ist. Zur Einstellung des Abstandes der Schirme untereinander sind die jeweils zusammengehörenden Haltevorrichtungen 60a und 60b gegenüber den benachbarten Haltevorrichtungen 60a und 60b auf den Ketten verschiebbar, wie anhand des Doppelpfeils 71 angedeutet wird.

Das Anspritzen der Schirme an den Strunk zur Herstellung eines Verbundisolators erfolgt auf der erfindungsgemäßen Vorrichtung wie nachfolgend beschrieben:

Auf den beiden Ketten 61 und 62 sind in dem dem Strunk 41 abgewandten Bereich der Ketten in den Haltevorrichtungen 60a und 60b die Teile 58a und 58b bzw. 59a und 59b der Schirmform-Hälften beabstandet voneinander angeordnet. Der Abstand zwischen zwei Schirmen ist der Abstand zwischen zwei benachbarten Trennebenen 55, durch die jeweils die Oberseite der Schirmform, zusammengesetzt aus den Teilen 58a und 59a, von der Unterseite der Schirmform, zusammengesetzt aus den Teilen 58b und 59b, getrennt wird. Dieser Abstand ist im vorliegenden Ausführungsbeispiel mit 72 bezeichnet.

Während der Strunk 41 in Vorschubrichtung 45 durch die Vorschubeinrichtung 42 in die Vorrichtung 40 hineingeschoben wird, drehen sich die Umlenkräder 64 und 66 jeweils in Pfeilrichtung 73 bzw. 74 aufeinander zu und transportieren die Teile 58a und 58b einer Schirmform-Hälfte auf der Kette 61 und die Teile 59a und 59b einer Schirmform-Hälfte auf der Kette 62 jeweils von der dem Strunk 41 abgewandten Seite in Richtung auf den Strunk. Ab dem Punkt, wo die Kette 61 und die Kette 62 parallel zum Strunk 41 verlaufen, mit dem Beginn der Formstrecke F, trifft das Teil 58a auf das Teil 59a. Beide zusammen formen die Oberseite des Schirms 54. Das Teil 58b trifft auf das Teil 59b und beide zusammen formen die Unterseite des Schirms. Noch ist die Schirmform 52 in der Ebene 55 geöffnet. Damit der Schirm angespritzt werden kann, wird die Schirmform 52 durch Aneinanderschieben der Teile der Schirmform-Hälften geschlossen, wie jeweils durch die aufeinanderzeigenden Pfeile 75 bzw. 76 symbolisiert wird.

Sobald eine der Schirmformen, im vorliegenden Fall die Schirmform 52, geschlossen ist, wird sie an eine Spritzgusseinrichtung angeschlossen. Dazu haben die Teile 59a der Schirmform-Hälfte auf der Kette 62 jeweils eine Füllöffnung 77. Wenn sich eine Schirmform, hier 52, um den Strunk 41 gelegt hat und vollständig geschlossen ist, wird an die Füllöffnung 77 eine Spritzgussmaschine 78 angeschlossen, um den Werkstoff für den anzuspritzenden Schirm in die Schirmform 52 zu pressen. Im vorliegenden Ausführungsbeispiel wird das durch ein Anschlussrohr 79 angedeutet. Nach dem Füllen der Schirmform 52 wird das Anschlussrohr 79 der Spritzgussmaschine 78 von der Schirmform 52 gelöst und die Schirmform wandert um einen Schirmabstand 72 in Vorschubrichtung 45 weiter. Dabei legt die sich noch in Öffnungsstellung befindliche nachfolgende Schirmform um den Strunk 41 und wird, wie durch die aufeinanderzeigenden Pfeile 75 und 76 angedeutet, ebenfalls geschlossen.

Im vorliegenden Ausführungsbeispiel befinden sich sechs geschlossene Schirmformen 52 in der Vorrichtung 40. Zwischen jeweils drei geschlossenen Schirmformen befindet sich eine Lücke, hier in der Größe eines doppelten Schirmabstands 72. Die Haltevorrichtungen 60a und 60b an der Position 80 sind nicht durch eine Schirmform besetzt, weil an der Position 80 der Strunk 41 zum Abtrennen eines fertigen Verbundisolators 81 durchtrennt werden soll. Nach dem Ausformen der Schirme 54 in den drei in Vorschubrichtung gesehen vor der Position 80 liegenden geschlossenen Schirmformen 52 ist ein neuer Verbundisolator 81 hergestellt. Das Abtrennen dieses neuen Verbundisolators 81 erfolgt an der Position 80 mittels einer Trenneinrichtung 82, die der Vorrichtung 40 nachgeschaltet ist. Nach Vorgabe durch die Steuereinrichtung 50 wird die Trenneinrichtung 82 dem Strunk 41 zugestellt und trennt mit ihrem Trennwerkzeug 83 den fertigen Verbundisolator 81 ab. Danach wird die Trenneinrichtung 82 wieder zurückgezogen. Die Zustell- und Rückholbewegung der Trenneinrichtung 82 wird durch den Doppelpfeil 84 angedeutet. Im vorliegenden Ausführungsbeispiel wurde durch die Trenneinrichtung 82 bereits ein fertiger Verbundisolator 85, nur teilweise dargestellt, vom Strunk 41 getrennt.

Während des Transports der geschlossenen Schirmformen mittels der Ketten 61 und 62 durch die Formstrecke F kühlen die angespritzten Schirme in den Schirmformen aus. Das Ausformen der Schirme erfolgt automatisch im Bereich der Antriebsräder 63 und 65. Hat eine Schirmform die Ebene 86 erreicht, die das Ende der Formstrecke F bildet und in der die Ketten 61 und 62 durch die Antriebsräder 63 und 65 aus ihrem Parallellauf umgelenkt werden, werden die Haltevorrichtungen 60a und 60b jeweils auseinander geschoben, wie es durch die Doppelpfeile 87 und 88 angedeutet wird. Dabei heben die Teile 58b und 59b von der Schirmunterseite 89 ab und die Teile 58a und 59a heben von der Schirmoberseite 90 ab. Danach ist ein neuer Schirm 54 ausgeformt.

Beim Weitertransport der Teile 58a und 58b sowie 59a und 59b der Schirmform-Hälften durch die umgelenkten Ketten 61 bzw. 62 können die Schirmform-Hälften bei entsprechendem Durchmesser und geringem Abstand der Schirme gegen die Schirme stoßen. In diesem Fall ist vorgesehen, dass die Teile 58a und 58b sowie 59a und 59b der Schirmform-Hälften um 90° seitwärts aus der Transportrichtung 45 herausklappen, wie es durch die Pfeile 91 und 92 angedeutet wird. Die jeweils umgeklappten Teile der Schirmform-Hälften sind mit 58ak, 58bk sowie 59ak und 59bk bezeichnet. Das Klappen kann beispielsweise durch eine mechanische Zwangsführung erreicht werden, die hier nicht dargestellt, aber aus dem Stand der Technik bekannt ist.

Wenn die Teile der Schirmform-Hälften aus dem Kollisionsbereich mit den Schirmen heraustransportiert worden sind, etwa nach einer viertel Umdrehung der Antriebsräder 63 und 65, werden sie wieder in ihre Ursprungsstellung, senkrecht zu den Ketten 61 bzw. 62, zurückgeklappt, wie es durch die Pfeile 93 bzw. 94 angedeutet wird.

Auf der dem Strunk 41 abgewandten Seite der Ketten 61 und 62 besteht die Möglichkeit, die Schirmformen auszuwechseln und außerdem ihren Abstand voneinander zur Änderung des Schirmabstandes zu ändern. Im vorliegenden Ausführungsbeispiel wird durch die Pfeile 95 und 96 sowie 97 und 98 ein solcher Austausch der Schirmformen symbolisiert. Im vorliegenden Ausführungsbeispiel werden die Schirmformen 52 gegen die Schirmformen 53 für Schirme mit einem größeren Schirmdurchmesser ausgetauscht. Dazu werden, wie durch Pfeile 95 und 96 angedeutet, die Teile 58a und 58b sowie 59a und 59b der Schirmform-Hälften aus den jeweiligen Haltevorrichtungen 60a bzw. 60b herausgelöst. Darauf werden die Teile 58a und 58b sowie 59a und 59b der im vorliegenden Ausführungsbeispiel für Schirme mit einem größeren Durchmesser vorgesehenen Schirmformen 53 in die jeweiligen Haltevorrichtungen eingesetzt, wie durch die Pfeile 97 bzw. 98 angedeutet wird. Die Änderung des Abstand der Schirme erfolgt durch eine Änderung des Abstands der Haltevorrichtungs-Paare 60a und 60b voneinander, wie durch den Doppelpfeil 71 angedeutet wird. Da im vorliegenden Ausführungsbeispiel die Formen im geöffneten Zustand gewechselt werden, wird der Abstand 72 der Schirme durch den Abstand der jeweiligen Mittelpunkte des Abstands der Haltevorrichtungen 60a und 60b untereinander bestimmt.

Da die Schirmformen 53 für Schirme mit einem größerem Durchmesser vorgesehen sind, muss auch der Abstand der Ketten 61 und 62 vom Strunk 41 vergrößert werden.

Diese Abstandsänderung kann dann vorgenommen werden, wenn alle Schirmformen 52 mit dem geringeren Schirmdurchmesser die Formstrecke F durchlaufen haben. Bevor die Haltevorrichtungen nach der Bestückung mit den neuen Schirmformen in die Formstrecke F eingezogen werden, ist ein Vorlauf der Ketten 61 und 62 zunächst ohne Schirmformen in die Formstrecke F vorgesehen. Dann kann der Kettenabstand zum Strunk 41 auf die neue Formgröße eingestellt werden. Die beiden Ketten 61 und 62 werden durch Auseinanderrücken der Antriebs- und Umlenkräder in übereinstimmenden Abständen von dem Strunk 41 so weit entfernt, dass sich die Teile der Schirmformhälften zu einer geschlossenen Schirmform 53, der Schirmform für Schirme mit einem größeren Schirmdurchmesser, zusammenfügen. Bei der Verwendung von Schirmformen für Schirme mit geringerem Durchmesser müssen die Ketten 61 und 62 entsprechend näher an den Strunk 41 gerückt werden. Dabei ist ein Vorlauf ohne Formen durch die Formstrecke F nicht erforderlich. Die Verstellmöglichkeiten der Ketten 61 und 62 werden durch die Doppelpfeile 99 und 100 symbolisiert.

In gewissen Grenzen des Schirmdurchmessers ist eine Veränderung des Abstands der Ketten 61 und 62 zum Strunk 41 nicht erforderlich, wenn die Schirmformen eine einheitliche Größe haben und nur die für die Ausformung des Schirms erforderliche Ausnehmung in den jeweiligen Teilen der Schirmformhälften auf die Schirmdurchmesser abgestimmt ist. Mit dieser Einrichtung ist es beispielsweise möglich, dass an ein und demselben Strunk Schirme mit unterschiedlichem Schirmdurchmesser angespritzt werden können.

Ansonsten können durch die vorgegebene Austauschbarkeit der Schirmformen Schirme unterschiedlicher Form an ein und denselben Verbundisolator angespritzt werden. So ist es beispielsweise möglich, die Schirmunterseite von Schirmen an ein und denselben Isolator sowohl mit, als auch ohne Konturen zur Kriechwegverlängerung auf der Unterseite auszuformen.

Weiterhin ist es möglich, statt jeweils nur eine Schirmform nach dem Schließen zu füllen, erst mehrere Schirmformen in die Formstrecke F einlaufen zu lassen und dann diese gleichzeitig zu füllen. Maßgeblich dafür ist die Länge der Formstrecke F und die Kapazität der Spritzgußmaschine. Erforderlichenfalls müssen für ein solches Ausführungsbeispiel eine der zu füllenden Formen entsprechende Anzahl von Spritzgußmaschinen vorgesehen sein.

## Patentansprüche

1. Verfahren zur Herstellung von Verbundisolatoren, bestehend aus einem Strunk in Form eines Stabes oder Rohres, der mit einem Mantel überzogen ist und der voneinander beabstandete, tellerförmige Schirme aufweist, wobei Mantel und Schirme aus einem elastomeren Werkstoff mit hohen Isolationseigenschaften bestehen, **dadurch gekennzeichnet, dass** auf dem Strunk zunächst der Mantel aufgetragen wird, dass danach zum Anspritzen eines Schirmes dem Strunk eine Spritzgußform, eine Schirmform, zugestellt wird, dass der Werkstoff für den Schirm in die Schirmform eingespritzt wird, dass nach Aushärten des Werkstoffs zum Ausformen des Schirmes die Schirmform geöffnet und vom Strunk wieder wegbewegt wird und dass dann zum Anspritzen des nachfolgenden Schirmes der Strunk mit dem bereits angespritzten Schirm gegenüber der Schirmform oder die Schirmform gegenüber dem Strunk so weit verschoben wird, dass dem Strunk die Schirmform in der Position zugestellt werden kann wo der nachfolgende Schirm an ihn angespritzt werden soll.

2. Verfahren nach Anspruch 1, **dadurch gekennzeichnet, dass** zur Herstellung mehrerer Verbundisolatoren jeweils in etwa im Abstand der Länge eines Verbundisolators eine Schirmform angeordnet ist, mit denen jeweils gleichzeitig ein Schirm eines Verbundisolators an den Strunk angespritzt wird, der eine durchgehende Länge aufweist, die mindestens der Länge der Anzahl der gleichzeitig herzustellenden Verbundisolatoren entspricht, und dass nach dem Anspritzen des jeweils letzten Schirms der Strunk jeweils entsprechend der Länge eines Verbundisolators durchgetrennt wird.

3. Verfahren nach Anspruch 1 oder 2 **dadurch gekennzeichnet, dass** zur Herstellung eines Verbundisolators mehrere hintereinander angeordnete Schirmformen dem Strunk zugestellt werden.

4. Verfahren nach Anspruch 3, **dadurch gekennzeichnet, dass** die Schirmformen gleichzeitig zugeführt und die Schirme gleichzeitig angespritzt werden.

5. Verfahren nach Anspruch 3, **dadurch gekennzeichnet, dass** die Schirmformen zum Anspritzen der Schirme an den Strunk nacheinander oder beliebig zeitversetzt zugeführt werden.

6. Verfahren nach einem der Ansprüche 3 bis 5, **dadurch gekennzeichnet, dass** zur Änderung des Abstands zwischen den Schirmen der Abstand der Schirmformen geändert wird.

7. Verfahren nach einem der Ansprüche 2 bis 6, **dadurch gekennzeichnet, dass** zur Herstellung unterschiedlicher Verbundisolatoren die Anzahl der Schirmformen geändert wird.

8. Verfahren nach einem der Ansprüche 1 bis 7, **dadurch gekennzeichnet, dass** zur Herstellung unterschiedlicher Verbundisolatoren die Schirmformen in Bezug auf Größe und/oder Gestalt der Schirme ausgewechselt werden.

9. Verfahren nach einem der Ansprüche 6 bis 8, **dadurch gekennzeichnet, dass** die Änderungen einzeln oder in Kombination miteinander vorgenommen werden.

10. Verfahren nach einem der Ansprüche 1 bis 9, **dadurch gekennzeichnet, dass** der Strunk vor dem Anspritzen der Schirme mit einem Mantel aus einem elastomeren Werkstoff mit hohen Isolationseigenschaften, vorzugsweise einem HTV-Silikon, überzogen wird.

11. Verfahren nach Anspruch 10, **dadurch gekennzeichnet, dass** der Mantel vor dem Anspritzen der Schirme vorbehandelt wird.

12. Verfahren nach Anspruch 11, **dadurch gekennzeichnet, dass** der Mantel aufgerauht wird.

13. Verfahren nach Anspruch 11, **dadurch gekennzeichnet, dass** der Mantel mit einem Haftvermittler, vorzugsweise einem Silan, überzogen wird.

14. Verfahren nach Anspruch 12 und 13, **dadurch gekennzeichnet, dass** beide Vorbehandlungen kombiniert werden.

15. Verfahren nach einem der Ansprüche 1 bis 14, **dadurch gekennzeichnet, dass** als Werkstoff der Schirme ein elastomerer Werkstoff, vorzugsweise ein HTV-Silikon, verwendet wird.

16. Verfahren nach einem der Ansprüche 1 bis 15, **dadurch gekennzeichnet, dass** Schirme aus unterschiedlichen Werkstoffen an ein und denselben Strunk angespritzt werden.

17. Vorrichtung zur Herstellung von Verbundisolatoren, die aus einem Strunk in Form eines Stabes oder Rohres bestehen, der mit einem Mantel überzogen ist und der voneinander beabstandete, tellerförmige Schirme aufweist, insbesondere zur Durchführung des Verfahrens nach einem der Ansprüche 1 bis 16, **dadurch gekennzeichnet, dass** nach einer Einrichtung (48) zum Überziehen des Strunks (1; 41) mit dem Mantel mindestens eine Spritzgußform, eine Schirmform, (10a, 10b, 11 a, 11 b, 12a, 12b, 13a, 13b; 52, 53) zum Anspritzen eines Schirmes (2, 3, 4, 5, 19, 20, 21, 22, 23, 24, 25, 26, S; 54), angeordnet ist, die zum Anspritzen eines Schirmes dem Strunk zustellbar und zum Ausformen des Schirmes zu öffnen ist, dass eine Vorschubeinrichtung (42) vorgesehen ist zum Verschieben (16; 45) des Strunks (1; 41) oder der Schirmform und dass nach jedem Verschieben (17; 72) des Strunks (1; 41) oder der Schirmform der Schirmform die Position auf dem Strunk gegenüberliegt, auf der das Anspritzen eines Schirmes vorgesehen ist.

18. Vorrichtung nach Anspruch 17, **dadurch gekennzeichnet, dass** zur Herstellung mehrerer Verbundisolatoren (27, 28, 29, 30) jeweils in etwa im Abstand der Länge eines Verbundisolators eine Schirmform (10a, 10b, 11 a, 11 b, 12a, 12b, 13a, 13b) angeordnet ist, dass mit diesen Schirmformen jeweils gleichzeitig ein Schirm (2, 3, 4, 5, 19, 20, 21, 22, 23, 24, 25, 26, S) eines Verbundisolators an den Strunk (1) anspritzbar ist, dass der Strunk (1) eine durchgehende Länge aufweist, die mindestens der Länge der Anzahl der gleichzeitig herzustellenden Verbundisolatoren (27, 28, 29, 30) entspricht, und dass jeweils zwischen dem letzten Schirm eines Verbundisolators und dem ersten Schirm des nachfolgenden Verbundisolators der Strunk (1) eine Position (32) zum Durchtrennen aufweist.

19. Vorrichtung nach Anspruch 17 oder 18 **dadurch gekennzeichnet, dass** zur Herstellung eines Verbundisolators (81, 85) mit mehreren Schirmen (54) mehrere Schirmformen (52, 53) hintereinander angeordnet sind und dass diese Schirmformen (52, 53) dem Strunk (41) zum Anspritzen der Schirme (54) zustellbar sind.

20. Vorrichtung nach Anspruch 19, **dadurch gekennzeichnet, dass** die Schirmformen dem Strunk gleichzeitig zustellbar sind.

21. Vorrichtung nach Anspruch 19, **dadurch gekennzeichnet, dass** die Schirmformen (52, 53) dem Strunk (41) nacheinander oder beliebig zeitversetzt zustellbar sind

22. Vorrichtung nach einem der Ansprüche 19 bis 21, **dadurch gekennzeichnet, dass** zur Änderung des Abstands (72) zwischen den Schirmen (54) der Abstand (71) der Schirmformen (52, 53) veränderbar ist.

23. Vorrichtung nach einem der Ansprüche 19 bis 22, **dadurch gekennzeichnet, dass** die Anzahl der Schirmformen (52, 53) veränderbar ist zur Herstellung von Verbundisolatoren (81, 85) mit einer unterschiedlichen Anzahl von Schirmen (54).

24. Vorrichtung nach einem der Ansprüche 17 bis 23, **dadurch gekennzeichnet, dass** die Schirmformen (10a, 10b, 11a, 11 b, 12a, 12b, 13a, 13b; 52, 53) in Bezug auf Größe und/oder Gestalt der Schirme (2, 3, 4, 5, 19, 20, 21, 22, 23, 24, 25, 26, S; 54) auswechselbar sind zur Herstellung unterschiedlicher Verbundisolatoren (27, 28, 29, 30; 81, 85).

25. Vorrichtung nach einem der Ansprüche 22 bis 24, **dadurch gekennzeichnet, dass** die Änderungen einzeln oder in Kombination miteinander vornehmbar sind.

26. Vorrichtung nach einem der Ansprüche 17, 19 oder 21 bis 25, **dadurch gekennzeichnet, dass** zur kontinuierlichen Herstellung von Verbundisolatoren (81, 85) mehrere hintereinander angeordnete Schirmformen (52, 53) vorgesehen sind, dass die Schirmformen (52, 53) in Schirmform-Hälften (58a, 58b; 59a, 59b) geteilt sind, dass die Schirmform-Hälften (58a, 58b; 59a, 59b) jeweils auf einer endlosen, umlaufenden Kette (61 bzw. 62) angeordnet sind, dass die eine Kette (61) rechts und die andere Kette (62) links, in Vorschubrichtung (45) gesehen, parallel zur Mittellinie (56) des Strunks (41) am Strunk angeordnet ist, dass die Ketten (61, 62) in dieser Anordnung die Formstrecke (F) bilden, in der die Schirmformen (52) zum Anspritzen der Schirme (54) den Strunk (41) umschließend geschlossen sind, dass die Teilungsebene (57) der Schirmform-Hälften (58a, 58b; 59a, 59b) durch die Mittellinie (56) des Strunks (41) geht, dass die Ketten (61, 62) und der der Formstrecke (F) zugeführte Strunk (41) mit der gleichen Vorschubgeschwindigkeit (45) durch die Formstrecke (F) wandern, dass die Schirmform-Hälften (58a, 58b; 59a, 59b) mittels der Ketten (61 bzw. 62) der Formstrecke (F) zum Bilden der geschlossenen Schirmformen (52, 53) zuführbar und zum Ausformen der Schirme (54) wegtransportierbar sind und dass an die geschlossenen Schirmformen (52) in der Formstrecke (F) eine Spritzgußmaschine (78) zum Anspritzen der Schirme (54) anschließbar ist.

27. Vorrichtung nach Anspruch 26, **dadurch gekennzeichnet, dass** die Schirmform-Hälften selbst in einer Ebene (55) senkrecht zur Mittelline (56) des Strunks (41) in ihre Teile (58a, 58b bzw. 59a, 59b) teilbar und diese Teile in Richtung der Mittellinie (56) auf den jeweiligen Ketten (61 bzw. 62) verschiebbar angeordnet sind zum Schließen (75, 76) der Schirmformen (52) zum Anspritzen der Schirme (54) und zum Öffnen (78, 88) der Schirmformen (52) zum Ausformen der Schirme (54).

28. Vorrichtung nach Anspruch 26 oder 27, **dadurch gekennzeichnet, dass** der Abstand (72) der Schirme (54) durch Verschieben (71) der Schirmform-Hälften (58a, 58b; 59a, 59b) auf den jeweiligen Ketten (61 bzw.62) einstellbar ist.

29. Vorrichtung nach einem der Ansprüche 26 bis 28, **dadurch gekennzeichnet, dass** auf der dem Strunk (41) abgewandten Seite der Ketten (61, 62) die Teile (58a, 58b; 59a, 59b) der Schirmform-Hälften auswechselbar angeordnet sind.

30. Vorrichtung nach Anspruch 29, **dadurch gekennzeichnet, dass** auf der dem Strunk (41) abgewandten Seite der Ketten (61, 62) die Anzahl der Schirmformen (52, 53) einstellbar ist.

31. Vorrichtung nach Anspruch 29 oder 30, **dadurch gekennzeichnet, dass** auf der dem Strunk (41) abgewandten Seite der Ketten (61, 62) die Schirmformen (52, 53) auswechselbar sind in Bezug auf Größe und/oder Gestalt der Schirme (54).

32. Vorrichtung nach Anspruch 31, **dadurch gekennzeichnet, dass** der Abstand (99, 100) der Ketten (61 bzw. 62) zum Strunk (41) veränderbar ist in Bezug auf die Größe der Schirmformen (52, 53) bei sich änderndem Schirmdurchmesser.

33. Vorrichtung nach einem der Ansprüche 28 bis 32, **dadurch gekennzeichnet, dass** die Änderungen einzeln oder in Kombination miteinander vornehmbar sind.

34. Vorrichtung nach einem der Ansprüche 17 bis 33, **dadurch gekennzeichnet, dass** eine Einrichtung (49) zur Vorbehandlung des Mantels des Strunks (41) durch Aufrauhen und/oder Auftragen eines Haftvermittlers vor dem Anspritzen der Schirme (54) vorgesehen ist.

35. Vorrichtung nach einem der Ansprüche 17 bis 34, **dadurch gekennzeichnet, dass** eine Einrichtung (82) vorgesehen ist zum Abtrennen der fertig hergestellten Verbundisolatoren (85) an auf dem Strunk (41) vorgesehenen Positionen (80).

## Claims

1. A method for producing composite insulators, consisting of a shank in the form of a rod or tube, which is coated with a cover and has mutually spaced plate-like screens, the cover and the screens consisting of an elastomer material with high insulation properties, **characterised in that** the cover is applied to the shank first, **in that** an injection mould, a screen mould, is then placed on the shank in order to inject a screen, **in that** the material for the screen is injected into the screen mould, **in that** after the material has cured, the screen mould is opened to release the screen and moved away from the shank, and **in that** to inject the next screen, the shank with the screen already injected is displaced relative to the screen mould or the screen mould is displaced relative to the shank, over a distance such that the screen mould can be placed on the shank in the position where the next screen is to be injected onto it.

2. A method according to claim 1, **characterised in that**, to produce a plurality of composite insulators, a screen mould is respectively arranged at about the distance of the length of a composite insulator and a screen of a composite insulator is respectively injected simultaneously onto the shank by using it, the shank having a continuous length which corresponds at least to the length of the number of composite insulators to be produced simultaneously, and **in that** after the respective last screen has been injected, the shank is respectively cut according to the length of a composite insulator.

3. A method according to claim 1 or 2, **characterised in that** a plurality of screen moulds arranged behind one another are placed on the shank to produce a composite insulator.

4. A method according to claim 3, **characterised in that** the screen moulds are delivered simultaneously and the screens are injected simultaneously.

5. A method according to claim 3, **characterised in that** the screen moulds for injecting the screens are delivered to the shank successively or with an arbitrary time lag.

6. A method according to one of claims 3 to 5, **characterised in that** the spacing of the screen moulds is altered to change the distance between the screens.

7. A method according to one of claims 2 to 6, **characterised in that** the number of screen moulds is altered to produce different composite insulators.

8. A method according to one of claims 1 to 7, **characterised in that** the screen moulds are changed with respect to size and/or configuration of the screens to produce different composite insulators.

9. A method according to one of claims 6 to 8, **characterised in that** the changes are made individually or in combination with one another.

10. A method according to one of claims 1 to 9, **characterised in that** the shank is coated with a cover made of an elastomer material with high insulation properties, preferably an HTC silicone, before injecting the screens.

11. A method according to claim 10, **characterised in that** the cover is pretreated before injecting the screens.

12. A method according to claim 11, **characterised in that** the cover is roughened.

13. A method according to claim 11, **characterised in that** the cover is coated with an adhesion promoter, advantageously a silane.

14. A method according to claim 12 and 13, **characterised in that** the two pretreatments are combined.

15. A method according to one of claims 1 to 14, **characterised in that** an elastomer material, advantageously an HTC silicone, is used as the material of the screens.

16. A method according to one of claims 1 to 15, **characterised in that** screens made of different materials are injected on the same shank.

17. A device for producing composite insulators which consist of a shank in the form of a rod or tube coated with a cover and having mutually spaced plate-like screens, in particular for carrying out the method according to one of claims 1 to 16, **characterised in that** at least one injection mould, a screen mould (10a, 10b, 11a, 11b, 12a, 12b, 13a, 13b; 52, 53) for injecting a screen (2, 3, 4, 5, 19, 20, 21, 22, 23, 24, 25, 26, S; 54) is arranged, which can be placed on the shank to inject a screen and can be opened to release the screen, is arranged downstream of an apparatus (48) for coating the shank (1; 41) with the cover, **in that** a forward-feed apparatus (42) is provided for displacing (16; 45) the shank (1; 41) or the screen mould, and **in that** after each displacement (17; 72) of the shank (1; 41) or the screen mould, the screen mould faces the position at which the injection of a screen is intended.

18. A device according to claim 17, **characterised in that** to produce a plurality of composite insulators (27, 28, 29, 30), a screen mould (10a, 10b, 11a, 11b, 12a, 12b, 13a, 13b) is respectively arranged at about the distance of the length of a composite insulator and a screen (2, 3, 4, 5, 19, 20, 21, 22, 23, 24, 25, 26, S) of a composite insulator can respectively be injected simultaneously onto the shank (1) by using it, **in that** the shank (1) has a continuous length which corresponds at least to the length of the number of composite insulators (27, 28, 29, 30) to be produced simultaneously, and **in that** the shank (1) respectively has a cutting position (32) between the last screen of one composite insulator and the first screen of the next composite insulator.

19. A device according to claim 17 or 18, **characterised in that**, to produce a composite insulator (81, 85) with a plurality of screens (54), a plurality of screen moulds (52, 53) are arranged behind one another and **in that** these screen moulds (52, 53) can be placed on the shank (41) to inject the screens (54).

20. A device according to claim 19, **characterised in that** the screen moulds can be placed on the shank simultaneously.

21. A device according to claim 19, **characterised in that** the screen moulds (52, 53) can be placed on the shank (41) successively or with an arbitrary time lag.

22. A device according to one of claims 19 to 21, **characterised in that** the spacing (71) of the screen moulds (52, 53) can be altered to change the distance (72) between the screens (54).

23. A device according to one of claims 19 to 22, **characterised in that** the number of screen moulds (52, 53) can be altered to produce composite insulators (81, 85) with a different number of screens (54).

24. A device according to one of claims 17 to 23, **characterised in that** the screen moulds (10a, 10b, 11a, 11b, 12a, 12b, 13a, 13b; 52, 53) can be changed with respect to size and/or configuration of the screens (2, 3, 4, 5, 19, 20, 21, 22, 23, 24, 25, 26, S; 54) to produce different composite insulators (27, 28, 29, 30; 81, 85).

25. A device according to one of claims 22 to 24, **characterised in that** the changes can be made individually or in combination with one another.

26. A device according to one of claims 17, 19 or 21 to 25, **characterised in that**, to continuously produce composite insulators (81, 85), a plurality of screens (52, 53) arranged behind one another are provided, **in that** the screen moulds (52, 53) are divided into screen-mould halves (58a, 58b; 59a, 59b), **in that** the screen-mould halves (58a, 58b; 59a, 59b) are respectively arranged on an endless revolving chain (61 and 62, respectively), **in that** one chain (61) is arranged on the right and the other chain (62) is arranged on the left, viewed in the forward-feed direction (45), parallel to the mid-line (56) of the shank (41) and on the shank, **in that** the chains (61, 62) in this arrangement form the moulding section (F) in which the mould screens (52) are closed around the shank (41) to inject the screens (54), **in that** the partition plane (57) of the screen-mould halves (58a, 58b; 59a, 59b) passes through the mid-line (56) of the shank (41), **in that** the chains (61, 62) and the shank (41) delivered to the moulding section (F) move through the moulding section (F) with the same forward-feed speed (45), **in that** the screen-mould halves (58a, 58b; 59a, 59b) can be delivered to the moulding section (F) by means of the chains (61 and 62, respectively) to form the closed screen moulds (52, 53) and can be transported away to release the screens (54), and **in that** an injection-moulding machine (78) can be connected to the closed screen moulds (52) in the moulding section (F) to inject the screens (54).

27. A device according to claim 26, **characterised in that** the screen-mould halves can themselves be separated into their parts (58a, 58b and 59a, 59b, respectively) in a plane (55) perpendicular to the mid-line (56) of the shank (41), and these parts are arranged displaceably in the direction of the mid-line (56) on the respective chains (61 and 62, respectively) in order to close (75, 76) the screen moulds (52), to inject the screens (54) and to open (78, 88) the screen moulds (52) to release the screens (54).

28. A device according to claim 26 or 27, **characterised in that** the spacing (72) of the screens (54) can be adjusted by displacing (71) the screen-mould halves (58a, 58b; 59a, 59b) on the respective chains (61 and 62, respectively).

29. A device according to one of claims 26 to 28, **characterised in that** the parts (58a, 58b; 59a, 59b) of the screen-mould halves are arranged in an exchangeable manner on the other side of the chains (61, 62) from the shank (41).

30. A device according to claim 29, **characterised in that** the number of screen moulds (52, 53) can be adjusted on the other side of the chains (61, 62) from the shank (41).

31. A device according to claim 29 or 30, **characterised in that** the screen moulds (52, 53) are exchangeable with respect to size and/or configuration of the screens (54) on the other side of the chains (61, 62) from the shank (41).

32. A device according to claim 31, **characterised in that** the distance (99, 100) from the chains (61 and 62, respectively) to the shank (41) can be altered with respect to the size of the screen moulds (52, 53) with a changing screen diameter.

33. A device according to one of claims 28 to 32, **characterised in that** the changes can be made individually or in combination with one another.

34. A device according to one of claims 17 to 33, **characterised in that** an apparatus (49) is provided for pretreating the cover of the shank (41) by roughening and/or applying an adhesion promoter before the screens (54) are injected.

35. A device according to one of claims 17 to 34, **characterised in that** an apparatus (82) is provided for separating the ready-produced composite insulators (85) at intended positions (80) on the shank (41).

## Revendications

1. Procédé de fabrication d'isolateurs composites constitués d'un rut en forme de barre ou de tube qui est recouvert d'une enveloppe et présente des écrans en forme de plateaux espacés les uns des autres, l'enveloppe et les écrans étant formés d'un matériau élastomère ayant des propriétés d'isolation élevée, **caractérisé par le fait que** l'enveloppe est d'abord appliquée sur le fût, qu'ensuite un moule de moulage par injection, à savoir un moule d'écran, est approché du fût en vue du moulage par injection d'un écran, que le matériau pour l'écran est injecté dans le moule, qu'après le durcissement du matériau le moule est ouvert pour démouler l'écran et est éloigné du fût et que, en vue du moulage par injection de l'écran suivant, le fût, avec l'écran déjà moulé, est déplacé par rapport au moule d'écran ou le moule est déplacé par rapport au fût d'une distance telle que le moule d'écran puisse être approché du fût dans la position dans laquelle l'écran suivant doit être moulé par injection sur le fût.

2. Procédé selon la revendication 1, **caractérisé par le fait que** pour fabriquer plusieurs isolateurs composites, un moule d'écran est disposé chaque fois approximativement à la distance correspondant à la longueur d'un isolateur composite, les moules servant à mouler simultanément par injection un écran d'un isolateur composite sur le fût qui présente une longueur continue, laquelle correspond au moins à la longueur du nombre d'isolateurs composites devant être fabriqués en même temps, et **par le fait qu'**après le moulage par injection du dernier écran, le fût est coupé chaque fois à la longueur correspondant à un isolateur composite.

3. Procédé selon la revendication 1 ou 2, **caractérisé par le fait que** pour fabriquer un isolateur composite, plusieurs moules d'écran disposés les uns à la suite des autres sont approchés du fût.

4. Procédé selon la revendication 3, **caractérisé par le fait que** les moules d'écran sont amenés simultanément et les écrans sont moulés par injection simultanément.

5. Procédé selon la revendication 3, **caractérisé par le fait que** pour effectuer le moulage par injection des écrans sur le fût, les moules d'écran sont approchés les uns après les autres ou avec un décalage de temps quelconque.

6. Procédé selon une des revendications 3 à 5, **caractérisé par le fait que** pour modifier l'espacement des écrans, on modifie l'espacement des moules d'écran.

7. Procédé selon une des revendications 2 à 6, **caractérisé par le fait que** pour fabriquer des isolateurs composites différents, on modifie le nombre de moules d'écran.

8. Procédé selon une des revendications 1 à 7, **caractérisé par le fait que** pour fabriquer des isolateurs composites différents, on change les moules d'écran en fonction de la taille et/ou de la forme des écrans.

9. Procédé selon une des revendications 6 à 8, **caractérisé par le fait que** les modifications sont effectuées individuellement ou en combinaison les unes avec les autres.

10. Procédé selon une des revendications 1 à 9, **caractérisé par le fait que**, avant le moulage par injection des écrans, le fût est recouvert d'une enveloppe en un matériau élastomère ayant des propriétés d'isolation élevée, de préférence un silicone HTV.

11. Procédé selon la revendication 10, **caractérisé par le fait que**, avant le moulage par injection des écrans, l'enveloppe est soumise à un traitement préalable.

12. Procédé selon la revendication 11, **caractérisé par le fait que** l'enveloppe est rendue rugueuse.

13. Procédé selon la revendication 11, **caractérisé par le fait que** l'enveloppe est enduite d'un agent adhésif, de préférence un silane.

14. Procédé selon les revendications 12 et 13, **caractérisé par le fait que** les deux traitement préalables sont combinés.

15. Procédé selon une des revendications 1 à 14, **caractérisé par le fait que** l'on utilise pour les écrans un matériau élastomère, de préférence un silicone HTV.

16. Procédé selon une des revendications 1 à 15, **caractérisé par le fait que** des écrans faits de matériaux différents sont moulés par injection sur un même fût.

17. Installation de fabrication d'isolateurs composites qui sont constitués d'un fût en forme de barre ou de tube qui est recouvert d'une enveloppe et présente des écrans en forme de plateaux espacés les uns des autres, en particulier pour la mise en oeuvre du procédé selon une des revendications 1 à 16, **caractérisée par le fait que**, à la suite d'un dispositif (48) destiné à recouvrir le fût (1; 41) avec l'enveloppe, il est prévu au moins un moule d'injection, à savoir un moule d'écran (10a, 10b, 11a, 11b, 12a, 12b, 13a, 13b; 52, 53) pour le moulage par injection d'un écran (2, 3, 4, 5, 19, 20, 21, 22, 23, 24, 25, 26, S; 54), qui peut être approché du fût à des fins de moulage par injection d'un écran et peut être ouvert pour démouler l'écran, **par le fait qu'**il est prévu un dispositif d'avance (42) destiné à déplacer (16; 45) le fût (1; 41) ou le moule d'écran et **par le fait qu'**après chaque déplacement (17; 72) du fût (1; 41) ou du moule d'écran, le moule d'écran se trouve face à l'emplacement sur le fût où il est prévu d'effectuer le moulage par injection d'un écran.

18. Installation selon la revendication 17, **caractérisée par le fait que** pour fabriquer plusieurs isolateurs composites (27, 28, 29, 30), un moule d'écran (10a, 10b, 11a, 11b, 12a, 12b, 13a, 13b) est disposé chaque fois avec des espacements correspondant à la longueur d'un isolateur composite, que ces moules permettent chacun de mouler par injection simultanément un écran (2, 3, 4, 5, 19, 20, 21, 22, 23, 24, 25, 26, S) d'un isolateur composite sur le fût (1), que le fût (1) présente une longueur continue qui correspond au moins à la longueur du nombre d'isolateurs (27, 28, 29, 30) à réaliser simultanément et qu'entre le dernier écran d'un isolateur composite et le premier écran de l'isolateur suivant, le fût (1) présente un emplacement (32) pour effectuer une coupe.

19. Installation selon la revendication 17 ou 18, **caractérisée par le fait que** pour fabriquer un isolateur composite (81, 85) à plusieurs écrans (54), plusieurs moules d'écran (52, 53) sont disposés les uns à la suite des autres, et que ces moules d'écran (52, 53) peuvent être approchés du fût (41) en vue du moulage par injection des écrans (54).

20. Installation selon la revendication 19, **caractérisée par le fait que** les moules d'écran peuvent être approchés simultanément du fût.

21. Installation selon la revendication 19, **caractérisée par le fait que** les moules d'écran (52, 53) peuvent être approchés du fût (41) les uns après les autres ou avec un décalage de temps quelconque.

22. Installation selon une des revendications 19 à 21, **caractérisée par le fait que** pour modifier l'espacement (72) des écrans (54), on peut modifier l'espacement (71) des moules d'écran (52, 53).

23. Installation selon une des revendications 19 à 22, **caractérisée par le fait que** le nombre de moules d'écran (52, 53) peut être modifié pour fabriquer des isolateurs composites (81, 85) avec des nombres variables d'écrans (54).

24. Installation selon une des revendications 17 à 23, **caractérisée par le fait que** les moules d'écran (10a, 10b, 11a, 11b, 12a, 12b, 13a, 13b; 52, 53) peuvent être changés en fonction de la taille et/ou de la forme des écrans (2, 3, 4, 5, 19, 20, 21, 22, 23, 24, 25, 26, S; 54), en vue de réaliser des isolateurs composites (27, 28, 29, 30; 81, 85) différents.

25. Installation selon une des revendications 22 à 24, **caractérisée par le fait que** les modifications peuvent être effectuées individuellement ou en combinaison les unes avec les autres.

26. Installation selon une des revendications 17, 19 ou 21 à 25, **caractérisée par le fait que** pour réaliser la fabrication en continu d'isolateurs composites (81, 85), il est prévu plusieurs moules d'écran (52, 53) disposés les uns à la suite des autres, **par le fait que** les moules d'écran (52, 53) sont divisés en moitiés de moule (58a, 58b; 59a, 59b), que les moitiés de moule (58a, 58b; 59a, 59b) sont disposées respectivement sur une chaîne sans fin tournante (61 ou 62), que l'une (61) des chaînes se situe à droite et l'autre chaîne (62) à gauche de la ligne médiane (56) du fût (41), vu dans le sens de l'avance (45), et parallèlement à celle-ci, que dans cette configuration, les chaînes (61, 62) constituent la ligne de moulage (F) dans laquelle les moules d'écran (52) sont fermés en entourant le fût (41) pour réaliser le moulage par injection des écrans (54), que le plan de joint (57) des moitiés de moule (58a, 58b; 59a, 59b) passe par la ligne médiane (56) du fût (41), que les chaînes (61, 62) et le fût (41) amené à la ligne de moulage (F) avancent à la même vitesse (45) dans la ligne de moulage (F), que les moitiés de moule (58a, 58b; 59a, 59b) peuvent être amenées à l'aide des chaînes (61 et 62) à la ligne de moulage (F) pour constituer les moules d'écran (52, 53) fermés et peuvent être éloignées pour démouler les écrans (54), et qu'une machine de moulage par injection (78) peut être raccordée aux moules d'écran (52) fermés de la ligne de moulage (F), en vue de réaliser le moulage par injection des écrans (54).

27. Installation selon la revendication 26, **caractérisée par le fait que** les moitiés de moule d'écran elles-mêmes peuvent être divisées perpendiculairement à la ligne médiane (56) du fût (41) en leurs parties (58a, 58b ou 59a, 59b) et ces parties peuvent être déplacées sur la chaîne (61 ou 62) respective, dans le sens de la ligne médiane (56), pour fermer (75, 76) les moules (52), en vue du moulage par injection des écrans (54), et pour ouvrir (78, 88) les moules (52), en vue du démoulage des écrans (52).

28. Installation selon la revendication 26 ou 27, **caractérisée par le fait que** l'espacement (72) des écrans (54) peut être réglé par déplacement (71) des moitiés de moule d'écran (58a, 58b; 59a, 59b) sur la chaîne (61 ou 62) respective.

29. Installation selon une des revendications 26 à 28, **caractérisée par le fait que** sur le côté des chaînes (61, 62) qui est éloigné du fût (41), les parties (58a, 58b; 59a, 59b) des moitiés de moules d'écran sont disposées de manière à pouvoir être changées.

30. Installation selon la revendication 29, **caractérisée par le fait que** le nombre de moules d'écran (52, 53) peut être modifié sur le côté des chaînes (61, 62) qui est éloigné du fût (41).

31. Installation selon la revendication 29 ou 30, **caractérisée par le fait que** sur le côté des chaînes (61, 62) qui est éloigné du fût (41), les moules d'écran (52, 53) peuvent être changés en fonction de la taille et/ou de la forme des écrans (54).

32. Installation selon la revendication 31, **caractérisée par le fait que** l'espacement (99, 100) des chaînes (61 ou 62) par rapport au fût (41) peut être modifié en fonction de la taille des moules d'écran (52, 53), lorsque le diamètre des écrans change.

33. Installation selon une des revendications 28 à 32, **caractérisée par le fait que** les modifications peuvent être effectuées individuellement ou en combinaison les unes avec les autres.

34. Installation selon une des revendications 17 à 33, **caractérisée par le fait qu'**il est prévu un dispositif (49) de traitement préalable de l'enveloppe du fût (41), qui consiste à rendre rugueuse l'enveloppe du fût (41) et/ou à appliquer un agent adhésif avant le moulage par injection des écrans (54).

35. Installation selon une des revendications 17 à 34, **caractérisée par le fait qu'**il est prévu un dispositif (82) pour couper les isolateurs composites (85) terminés, à des emplacements (80) prévus sur le fût (41).
